# EUROPEAN PATENT SPECIFICATION

(11) **EP 0 414 448 B1**
(45) Date of publication and mention of the grant of the patent: **26.01.1994**
(21) Application number: 90309016.5
(22) Date of filing: 16.08.1990
(51) Int. Cl.: B62D 6/02

(54) **Power steering mechanism**
Servolenkvorrichtung
Mécanisme pour direction assistée

(30) Priority: 19.08.1989 GB 8918961
(43) Date of publication of application: 27.02.1991
(73) Proprietor: ADWEST ENGINEERING LIMITED, Reading RG5 4SN, Berkshire (GB)
(72) Inventor: Chandler, Kenneth, Lower Earley, Reading RG5 4SN (GB)
(74) Representative: Dealtry, Brian

(56) References cited:
- EP-A- 0 194 929
- EP-A- 0 302 267
- DE-A- 3 635 439
- DE-A- 3 835 774

## Description

This invention relates to power steering mechanisms for motor vehicles and more particularly to a power steering mechanism in which the resistance to actuation of a steering control valve varies as a function of vehicle speed.

In EP-A-0302267 a power steering system is disclosed comprising a control valve having first and second valve members which are relatively movable to direct fluid under pressure to one side or the other of a double-acting power steering motor, means for resisting relative movement between said first and second valve members with a force which varies as a function of vehicle speed to decrease said force with decreasing vehicle speed and increase said force with increasing vehicle speed, said resisting means comprising a force-transmitting member connected with said first valve member and movable toward and away from said second valve member, means for increasing resistance to relative movement between said first and second valve members as said force-transmitting member moves toward said second valve member, a spring urging said force-transmitting member towards said second valve member, and a fluid pressure chamber between said force-transmitting member and said second valve member, the fluid pressure in said chamber opposing the force of said spring and being varied as a function of vehicle speed so that the force urging said force-transmitting member towards said second valve member decreases with decreasing vehicle speed and increases with increasing vehicle speed. The steering control valve is a conventional rotary control valve having an inner valve member or rotor which is coaxial with, and rotatable relative to, an outer valve member or sleeve against the resistance of a torsion bar in conventional manner.

The present invention has as its object to provide an improvement over the power steering system disclosed in EP-A-0302267 which enables more precise control of the force exerted on said force transmitting member and which enables, in a preferred embodiment, the torsion bar between the inner valve member and the outer valve member or sleeve of the steering control valve to be dispensed with.

The present invention provides a power steering mechanism for vehicles comprising:
a control valve having first and second valve members which are relatively movable to direct fluid under pressure to one side or the other of a double-acting power steering motor;
resisting means for resisting relative movement between said first and second valve members with a force which varies as a function of vehicle speed to decrease said force with decreasing vehicle speed and increase said force with increasing vehicle speed, said resisting means comprising:
a force-transmitting member connected with said first valve member and movable toward and away from said second valve member,
means for increasing resistance to relative movement between said first and second valve members as said force-transmitting member moves toward said second valve member,
and means for urging said force-transmitting member towards said second valve member with a force which decreases with decreasing vehicle speed and increases with increasing vehicle speed and including a first fluid pressure chamber between said force transmitting member and said second valve member, wherein
a second fluid pressure chamber is provided on the opposite side of said force-transmitting member to said first fluid pressure chamber, and
speed-responsive valve means is provided for controlling the fluid pressures in said first and second fluid pressure chambers as a function of vehicle speed.

The control valve may comprise an inlet port connectable to a source of fluid under pressure a pair of motor ports each connected to a different side of said power steering motor and return port means connectable to a reservoir for the pressure fluid, said return port means comprising said first and second fluid pressure chambers and said speed-responsive valve means.

The control valve may be an open centre rotary control valve, said first and second valve members being relatively rotatable about a central axis to direct said fluid under pressure to one side or the other of said power steering motor, the return fluid passing to said return port means through the open centre of the control valve and said first and second fluid pressure chambers being connected to the open centre of the control valve. The speed responsive-valve means may control the flow of return fluid from said first and second fluid pressure chambers to said reservoir.

The force-transmitting member may be movable toward and away from said second valve member along said central axis and may be biased towards said second valve member as by means of a spring.

Preferably, said speed responsive valve means is a spool valve which meters the flow of pressure fluid from said first and second fluid pressure chambers to said reservoir. A solenoid may actuate the spool of said spool valve under the control of vehicle speed sensing means.

The resisting means for resisting relative movement between the first and second valve members may comprise cam means, such as cooperating cam surfaces on said force-transmitting member and said second valve member. According to a preferred embodiment, the cam means comprises opposed cam surfaces between said force-transmitting member and said second valve member, and a spherical member in engagement with said cam surfaces. The cam means and the spring biasing the force-transmitting member towards the second valve member may together act to bias the first and second valve members towards a centred position relative to one another, so eliminating the need for a torsion bar or other centering means between the first and second valve members.

The force-transmitting member may be rotatable with said first valve member and trimming screw means may be provided for angularly adjusting said force transmitting member about said central axis relative to said first valve member.

The invention will be more particularly described with reference to the accompanying drawings, in which:-
Figure 1 is a fragmentary sectional elevation of a power steering mechanism according to the present invention, and
Figure 2 is a section on the line B-B of Figure 1.

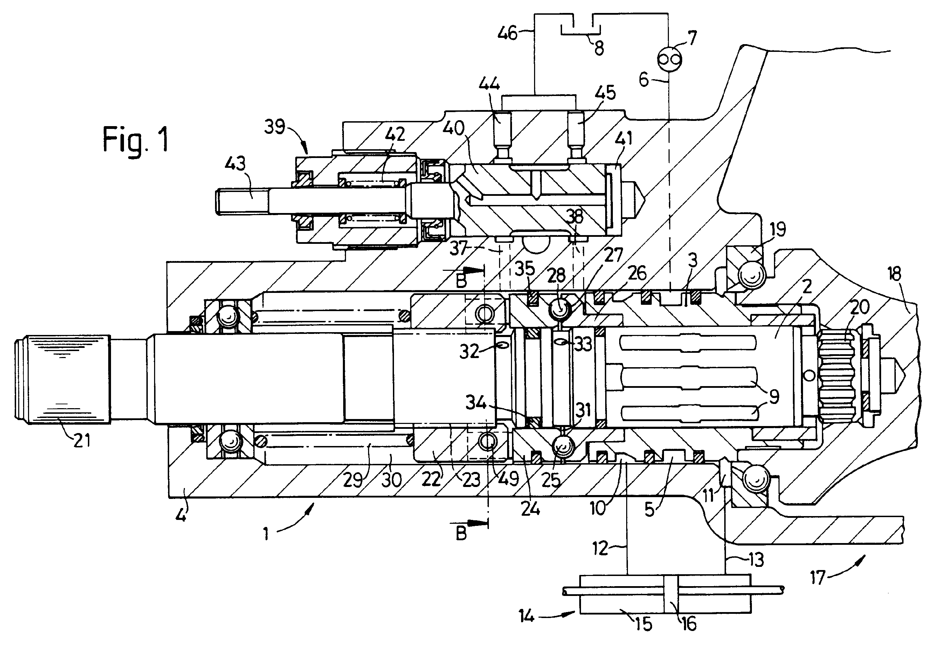

Referring to Figure 1 of the drawings, it will be seen that the power steering mechanism illustrated therein comprises a rotary control valve 1 comprising an inner valve member or rotor 2 rotatably mounted within a sleeve member 3 which in turn is rotatably mounted within a housing 4. Sleeve member 3 has a central annular groove 5 in the outer periphery thereof which is connected by way of a port (not shown) and a conduit 6 to an engine-driven pump for supplying fluid under pressure from a reservoir 8. Suitable passages (not shown) in the sleeve member 3 allow fluid under pressure in the annular groove to pass to longitudinally-extending grooves (not shown) in the inner surface of the sleeve member 3. The longitudinally-extending grooves in the sleeve member 3 cooperate with longitudinally-extending grooves 9 in the outer surface of the rotor member to direct the fluid under pressure to one or other of the annular motor grooves 10, 11 in the outer surface of the sleeve member 3 and to connect the other of the motor grooves to the hollow interior of the rotor member 2 which in turn is connected to the reservoir 8. Motor grooves 10 and 11 are connected by conduits 12 and 13, respectively, to opposite sides of a power steering motor 14 comprising a cylinder 15 and a double-acting piston 16. Power steering motor 14 provides power assistance in operating the steering mechanism.

The steering mechanism which is partially illustrated at 17, is of a conventional kind comprising an hour glass worm 18 and need not be further described since it is well known to those skilled in the art. Worm 18 is mounted at the end shown in Figure 1 in the housing 1 by means of a bearing 19 and is connected, to and rotatable with, the sleeve member 3. In addition, a splined end portion 20 of the rotor 2 loosely engages splines in the hour glass worm 18 so that the rotor 2 can rotate relative to the hour glass worm 18 but so that steering movement from the rotor 2 can be imparted to the hour glass worm 18 in the event of a loss of power assistance. At its other end, the rotor 2 terminates in a valve stem 21 which is connectable to the steering control of a motor vehicle.

The steering mechanism so far described is conventional.

In accordance with the present invention, an annular force-transmitting member 22 is mounted within the housing 1 and is splined on the rotor 2 as shown at 23 so as to be rotatable with the rotor 2 but movable longitudinally thereof. A front portion 24 of the force-transmitting member 22 has part-circular cam tracks 25 in a front face thereof. An annular ring 26 rotatable with the sleeve member 3 has opposed part-circular cam tracks 27 in a rear face thereof. Spherical members 28 engage the opposed cam tracks 25 and 27 as illustrated. Opposed cam tracks 25, 27 and spherical members 28 engaged therewith are spaced around the rotor member 2. A spring 29, which in the illustrated embodiment is a helical spring but which could be a wave or other suitable spring, urges the force-transmitting member 22 towards the mannular ring 26 to maintain the spherical members 28 in engagement with the cam tracks 25, 27. Chambers 30, 31 on either side of the force-transmitting member 22 communicate with the hollow interior of the rotor member 2 by way of radially-extending orifices 32, 33, respectively. Orifices 32, 33 are of a size such that there is a pressure difference across them, e.g. of about 0.25 bar (0.2548 kgf/cm²) when the fluid flow is equally shared between them and a pressure difference across them, e.g. of about 1 bar (1.019 kgf/cm²) when either one of the orifices 32, 33 takes all of the fluid flow. The orifices 32, 33 may be of the same or different sizes. Chambers 30 and 31 are separated from one another by annular seals 34, 35. Outlet passages 37, 38 connect the chambers 30, 31, respectively, to the reservoir 8 by way of a speed- responsive valve shown generally at 39. Speed- responsive valve 39 comprises a spool 40 axially slidable within a bore 41 in the housing 1. Spool 40 is axially movable against the bias of a spring 42 by a solenoid (not shown) around the end portion 43 of the spool under the control of vehicle speed sensing means (not shown). The spool 40 of speed-responsive spool valve 39 is operable to meter return pressure fluid from the chamber 30 and return passage 37 to an outlet port 44 and/or return pressure fluid from the chamber 31 and return passage 38 to an outlet port 45 as a function of vehicle speed. Outlet ports 44, 45 are connected by return conduit 46 to the reservoir 8.

When the rotor 2 is rotated by operation of the steering control of a motor vehicle, relative rotation between the rotor 2 and sleeve member 3 will be resisted, due to the action of the spring 29, by the spherical members 28 riding up on the cam tracks 25, 27. As vehicle speed decreases communication between the outlet passage 37 and outlet port 44 is increased and communication between the outlet passage 38 and outlet port 45 is decreased so that the fluid pressure within the chamber 31 rises and acts on the force-transmitting member 22 to tend to move the force-transmitting member 22 away from the annular ring 26 against the resistance of the spring 29 to decrease the resistance to turning of the rotor 2 relative to the sleeve member 3. As vehicle speed increases, communication between the outlet passage 38 and outlet port 45 is increased, and communication between the outlet passage 37 and outlet port 44 is decreased so that the fluid pressure in the chamber 31 is decreased and the fluid pressure in the chamber 30 is increased so that the fluid pressure in the chamber 30 assists the spring 29 in moving the force-transmitting member 22 towards the annular ring 26 to increase the resistance to relative movement between the rotor 2 and sleeve member 3. Suitably controlling the exit of fluid from the chambers 30 and 31 as a function of vehicle speed creates a pressure difference across the annulus of the front portion 24 of force transmitting member 22 which gives precise control of the resistance to relative movement between the rotor member 2 and sleeve member 3

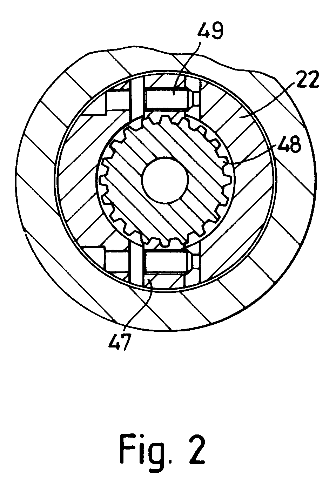

As shown in Figure 2, the force-transmitting member 22 comprises toothed segments 47 which engage splines 48 on the rotor 2 and trim screws 49 which enable the annular position of the force transmitting member 22 to be adjusted relative to the rotor 2 to enable the spherical members 28 to be centred in the cam track 25, 27 when the rotary control valve is properly centred.

The cam tracks 25, 27, spherical members 28 and spring 29 act to bias the rotor 2 and sleeve member 3 towards a centred position relative to one another and accordingly, in the steering mechanism illustrated in the drawings, the conventional torsion bar connecting the rotor 2 to the sleeve member 3 is not required and has been dispensed with.

Although in the illustrated embodiment the cam means between the front portion 24 of the force transmitting member 22 and the annular ring 26 comprises cam tracks 25, 27 and spherical members 28, it will be understood that other suitable cam means may be used if desired. For example the cam means may comprise cooperating cam surfaces on the front portion 24 and annular ring 26, such as a cam recess in one of the front portion 24 and annular ring 26 and a cooperating cam projection on the other of the front portion 24 and annular ring 26, thereby obviating the need for the spherical members 28.

## Claims

1. A power steering mechanism for vehicles comprising:
a control valve (1) having first and second valve members (2,3) which are relatively movable to direct fluid under pressure to one side or the other of a double-acting power steering motor (14);
resisting means for resisting relative movement between said first and second valve members (2,3) with a force which varies as a function of vehicle speed to decrease said force with decreasing vehicle speed and increase said force with increasing vehicle speed, said resisting means comprising:
a force-transmitting member (22) connected with said first valve member (2) and movable toward and away from said second valve member (3),
means for increasing resistance to relative movement between said first and second valve members as said force-transmitting member (22) moves toward said second valve member (3),
and means for urging said force-transmitting member (22) towards said second valve member (3) with a force which decreases with decreasing vehicle speed and increases with increasing vehicle speed and including a first fluid pressure chamber (30) between said force transmitting member (22) and said second valve member (3), characterised in that :
a second fluid pressure chamber (31) is provided on the opposite side of said force-transmitting member (22) to said first fluid pressure chamber (30), and
speed-responsive valve means (39) is provided for controlling the fluid pressures in said first and second fluid pressure chambers (30,31) as a function of vehicle speed.

2. A steering mechanism according to claim 1 wherein the resisting means for resisting relative movement between the first and second valve members (30,31) comprises cam means defined by cooperating cam surfaces (25,27) on said force-transmitting member (22) and said second valve member (3).

3. A steering mechanism according to claim 2 wherein the cam means comprises opposed cam surfaces (25,27) between said force-transmitting member (22) and said second valve member (3), and a spherical member (28) in engagement with said cam surfaces (25,27).

4. A steering mechanism according to claim 3 wherein cam means and said means for urging the force-transmitting member (22) towards the second valve member (3) act together to bias the first and second valve members (2,3) towards a centred position relative to one another.

5. A steering mechanism according to any preceding claim wherein the control valve (1) comprises an inlet port connectable to a source of fluid under pressure, a pair of motor ports (10,11) each connected to a different side of said power steering motor (14) and return port means connectable to a reservoir (8) for the pressure fluid, said return port means comprising said first and second fluid pressure chambers (30,31) and said speed-responsive valve means (39).

6. A steering mechanism according to claim 5 wherein the control valve comprises an open centre rotary control valve (1), said first and second valve members (2,3) being relatively rotatable about a central axis to direct said fluid under pressure to one side or the other of said power steering motor (14), the return fluid passing to said return port means through the open centre of the control valve (1) and said first and second fluid pressure chambers (30,31) being connected to the open centre of the control valve (1).

7. A steering mechanism according to claim 6 wherein the force-transmitting member (22) is movable toward and away from said second valve member (3) along said central axis and is biased towards said second valve member (3) by means of a spring (29).

8. A steering mechanism according to claim 6 or 7 wherein the force-transmitting member (22) is rotatable with said first valve member (2) and trimming screw means (49) are provided for angularly adjusting said force transmitting member (22) about said central axis relative to said first valve member (2).

9. A steering mechanism according to any preceding claim wherein the speed responsive-valve means controls the flow of return fluid from said first and second fluid pressure chambers (30,31) to said reservoir (8).

10. A steering mechanism according to claim 9 wherein said speed responsive valve means is a spool valve (39) which meters the flow of pressure fluid from said first and second fluid pressure chambers (30,31) to said reservoir (8).

11. A steering mechanism according to claim 10 including a solenoid arranged to actuate the spool (40) of said spool valve (39) under the control of vehicle speed sensing means.

## Patentansprüche

1. Servolenkeinrichtung für (Kraft-)Fahrzeuge, umfassend:
ein Regelventil (1) mit ersten und zweiten Ventilgliedern (2, 3), die relativ zueinander bewegbar sind, um unter Druck stehendes Fluid zur einen oder anderen Seite eines doppeltwirkenden Servolenkmotors (14) zu leiten,
eine Hemmeinrichtung zum Hemmen einer Relativbewegung zwischen den ersten und zweiten Ventilgliedern (2, 3) mit einer Kraft, die als Funktion der Fahrzeuggeschwindigkeit variiert, um diese Kraft bei abnehmender Fahrzeuggeschwindigkeit zu erhöhen, wobei die Hemmeinrichtung aufweist:
ein mit dem ersten Ventilglied (2) verbundenes und in Richtung auf das zweite Ventilglied (3) und von diesem hinweg bewegbares Kraftübertragungselement (22),
Mittel zum Erhöhen eines Widerstands gegenüber einer Relativbewegung zwischen den ersten und zweiten Ventilgliedern bei der Bewegung des Kraftübertragungselements (22) zum zweiten Ventilglied (3) hin
und Mittel zum Drängen oder Vorbelasten des Kraftübertragungselements (22) in Richtung auf das zweite Ventilglied (3) mit einer Kraft, die sich mit abnehmender Fahrzeuggeschwindigkeit verringert und sich mit zunehmender Fahrzeuggeschwindigkeit erhöht, und enthaltend eine erste Fluiddruckkammer (30) zwischen dem Kraftübertragungselement (22) und dem zweiten Ventilglied (3), dadurch gekennzeichnet, daß
an der von der ersten Fluiddruckkammer (30) abgewandten Seite des Kraftübertragungselements (22) eine zweite Fluiddruckkammer (31) vorgesehen ist und
eine geschwindigkeitsabhängige Ventileinheit (39) zum Regeln der Fluiddrücke in den ersten und zweiten Fluiddruckkammern (30, 31) als Funktion der Fahrzeuggeschwindigkeit vorgesehen ist.

2. Lenkeinrichtung nach Anspruch 1, wobei die Hemmeinrichtung zum Hemmen einer Relativbewegung zwischen den ersten und zweiten Ventilgliedern (30, 31 bzw. 2, 3) eine durch zusammenwirkende Kurvenflächen (25, 27) am Kraftübertragungselement (22) bzw. am zweiten Ventilglied (3) gebildete Steuer-Kurveneinrichtung aufweist.

3. Lenkeinrichtung nach Anspruch 2, wobei die Kurveneinrichtung gegenüberstehende Kurvenflächen (25, 27) zwischen dem Kraftübertragungselement (22) und dem zweiten Ventilglied (3) sowie ein mit den Kurvenflächen (25, 27) in Eingriff bzw. Anlage stehendes sphärisches Element (28) aufweist.

4. Lenkeinrichtung nach Anspruch 3, wobei die Kurveneinrichtung und das Mittel zum Vorbelasten des Kraftübertragungselements (22) zum zweiten Ventilglied (3) hin miteinander zusammenwirken, um die ersten und zweiten Ventilglieder (2, 3) in eine zentrierte Stellung relativ zueinander vorzubelasten.

5. Lenkeinrichtung nach einem der vorangehenden Ansprüche, wobei das Regelventil (1) einen mit einer Druckfluidquelle verbindbaren Einlaßanschluß, zwei jeweils mit einer anderen Seite des Servolenkmotors (14) verbundene Motoranschlüsse (10, 11) und ein mit einem Vorratsbehälter (8) für das Druckfluid verbindbares Rücklaufanschlußmittel aufweist, wobei das Rücklaufanschlußmittel die ersten und zweiten Fluiddruckkammern (30, 31) sowie die geschwindigkeitsabhängige Ventileinheit (39) umfaßt.

6. Lenkeinrichtung nach Anspruch 5, wobei das Regelventil ein Drehregelventil (1) mit offenem Zentrum umfaßt, die ersten und zweiten Ventilglieder (2, 3) relativ um eine zentrale Achse drehbar sind, um das Druckfluid zur einen oder anderen Seite des Servolenkmotors (14) zu leiten, das Rücklauffluid über das offene Zentrum des Regelventils (1) zum Rücklaufanschlußmittel strömt und die ersten und zweiten Fluiddruckkammern (30, 31) mit dem offenen Zentrum des Regelventils (1) verbunden sind.

7. Lenkeinrichtung nach Anspruch 6, wobei das Kraftübertragungselement (22) längs der zentralen Achse auf das zweite Ventilglied (3) zu und von ihm hinweg bewegbar und mittels einer Feder (29) in Richtung auf das zweite Ventilglied (3) vorbelastet ist.

8. Lenkeinrichtung nach Anspruch 6 oder 7, wobei das Kraftübertragungselement (22) mit dem ersten Ventilglied (2) (mit)drehbar ist und Verstellschraubenmittel (49) für eine Winkelverstellung des Kraftübertragungselements (22) um die zentrale Achse relativ zum ersten Ventilglied (2) vorgesehen sind.

9. Lenkeinrichtung nach einem der vorangehenden Ansprüche, wobei die geschwindigkeitsabhängige Ventileinheit die Strömung von Rücklauffluid von den ersten und zweiten Fluiddruckkammern (30, 31) zum Vorratsbehälter (8) steuert.

10. Lenkeinrichtung nach Anspruch 9, wobei die geschwindigkeitsabhängige Ventileinheit ein Steuerschieberventil (39) ist, welches die Strömung von Druckfluid aus den ersten und zweiten Fluiddruckkammern (30, 31) zum Vorratsbehälter (8) dosiert.

11. Lenkeinrichtung nach Anspruch 10, mit einem Solenoid, das zur Betätigung des (Steuer-)Schiebers (40) des Steuerschieberventils (39) unter der Steuerung einer Fahrzeuggeschwindigkeit-Meßeinrichtung angeordnet ist.

## Revendications

1. Mécanisme de direction assistée pour véhicules comprenant:
une soupape de réglage (1) ayant un premier et un second élément de soupape (2, 3) relativement mobiles, pour diriger le fluide sous pression d'un côté ou de l'autre d'un moteur de direction assistée à double effet (14) ;
des moyens de résistance pour résister au mouvement relatif entre ledit premier et ledit second élément de soupape (2, 3), avec une force qui varie en fonction de la vitesse du véhicule, pour diminuer ladite force lorsque la vitesse du véhicule diminue, et pour augmenter ladite force lorsque la vitesse du véhicule augmente, lesdits moyens de résistance comprenant:
un élément transmetteur de force (22) relié audit premier élément de soupape (2) et pouvant être déplacé vers et à l'écart dudit second élément de soupape (3),
des moyens pour augmenter la résistance au mouvement relatif entre ledit premier et ledit second élément de soupape, lorsque ledit élément transmetteur de force (22) se déplace vers ledit second élément de soupape (3),
et des moyens pour pousser ledit élément transmetteur de force (22) vers ledit second élément de soupape (3) avec une force qui diminue lorsque la vitesse du véhicule diminue, et augmente lorsque la vitesse du véhicule augmente, et incluant une première chambre de compression fluide (30) entre ledit élément transmetteur de force (22) et ledit second élément de soupape (3), caractérisé en ce que
une seconde chambre de compression du fluide (31) est fournie du côté opposé audit élément transmetteur de force (22) pour ladite première chambre de compression du fluide (30), et
des moyens de soupape répondant à la vitesse (39) sont fournis pour commander les pressions du fluide dans lesdites première et seconde chambres de compression du fluide (30, 31) en fonction de la vitesse du véhicule.

2. Mécanisme de direction selon la revendication 1, caractérisé en ce que les moyens de résistance pour résister au mouvement relatif entre le premier et le second élément de soupape (30, 31) comprennent des moyens de cames définis par des surfaces de cames (18, 22) opérant ensemble sur ledit élément transmetteur de force (22) et sur ledit second élément de soupape (3).

3. Mécanisme de direction selon la revendication 2, caractérisé en ce que les moyens de cames comprennent des surfaces de cames opposées (25, 27) entre ledit élément transmetteur de force (22) et ledit second élément de soupape (3), et un élément sphérique (28) en prise avec lesdites surfaces de cames (25, 27).

4. Mécanisme de direction selon la revendication 3, caractérisé en ce que les moyens de cames et lesdits moyens pour pousser l'élément transmetteur de force (22) vers ledit second élément de soupape (3) travaillent ensemble pour disposer le premier et le second élément de soupape (2, 3) vers une position centrée l'un par rapport à l'autre.

5. Mécanisme de direction selon l'une quelconque des revendications précédentes, caractérisé en ce que la soupape de réglage (1) comprend un orifice d'entrée pouvant être relié à une source de fluide sous pression, une paire d'orifices de moteur (10, 11) dont chacun est relié à un côté différent dudit moteur (14) d'assistance à la direction, et des moyens d'orifices de retour pouvant être reliés à un réservoir (8) pour le fluide sous pression, lesdits moyens d'orifices de retour comprenant ladite première et ladite seconde chambre de compression du fluide (30, 31) et lesdits moyens de soupape répondant à la vitesse (39).

6. Mécanisme de direction selon la revendication 5, caractérisé en ce que la soupape de réglage comprend une soupape de réglage rotative à centre ouvert (1), ledit premier et ledit second élément de soupape (2, 3) étant relativement pivotants autour d'un axe central pour diriger ledit fluide sous pression d'un côté ou de l'autre dudit moteur électrique (14) d'assistance à la direction, le fluide de retour arrivant auxdits moyens d'orifices de retour en traversant le centre ouvert de la soupape de réglage (1), et ladite première et ladite seconde chambre de compression du fluide (30, 31) étant reliées au centre ouvert de la soupape de réglage (1).

7. Mécanisme de direction selon la revendication 6, caractérisé en ce que l'élément transmetteur de force (22) est mobile vers et à l'écart dudit second élément de soupape (3) le long dudit axe central, et est disposé vers ledit second élément de soupape (3) au moyen d'un ressort (29).

8. Mécanisme de direction selon la revendication 6 ou 7, caractérisé en ce que l'élément transmetteur de force (22) peut être mis en rotation avec ledit premier élément de soupape (2), et des moyens de vis d'équilibrage (49) sont fournis pour ajuster angulairement ledit élément transmetteur de force (22) le long de l'axe central par rapport audit premier élément de soupape (2).

9. Mécanisme de direction selon l'une quelconque des revendications précédentes, caractérisé en ce que les moyens de soupape répondant à la vitesse commandent le flux du fluide de retour depuis ladite première et ladite seconde chambre de compression (30, 31) vers ledit reservoir (8).

10. Mécanisme de direction selon la revendication 9, caractérisé en ce que lesdits moyens de soupape répondant à la vitesse sont une soupape à bobine (39) qui mesure le flux du fluide de compression depuis ladite première et ladite seconde chambre de compression (30, 31) vers ledit réservoir (8).

11. Mécanisme de direction selon la revendication 10, incluant un solénoïde conçu pour mettre en fonctionnement la bobine (40) de ladite soupape à bobine (39), sous la commande des moyens de détection de la vitesse du véhicule.
